# DEMANDE DE BREVET EUROPEEN

(11) **EP 1 440 874 A1**
(43) Date de publication de la demande: **28.07.2004**
(21) Numéro de dépôt: 03290200.9
(22) Date de dépôt: 27.01.2003
(51) Int. Cl.: B62J 1/10, B62K 11/00, B62J 1/26, B62J 9/00

(54) **Selle équipée d'un dispositif de réglage vertical interne, en particulier pour motocyclette.**

(71) Demandeur: Bagster SA, 61600 La Ferte Mace (FR)
(72) Inventeur: Cruzio, Ludovic, 61600 La Ferte-Mace (FR); Nicolas, Jérome, 61410 Couterne (FR)
(74) Mandataire: Rousset, Jean-Claude

(57) **Abrégé**

L'invention concerne une selle pour motocyclette ou analogue comprenant une enveloppe (3) au format de la selle, remplie d'au moins un matériau souple et flexible, et un dispositif de réglage vertical (20) de la selle disposé à l'intérieur de l'enveloppe (3). Ce dispositif (20) comprend une ossature fixe, un bras longitudinal (40) et un élément poussoir (50) actionné par un organe (52) manoeuvrable par l'usager et propre à coopérer avec une des deux extrémités (44) du bras (40) pour permettre de faire glisser longitudinalement l'autre extrémité du bras dans des glissières obliques de l'ossature et placer le bras (40) sélectivement dans une position verticale choisie afin que ce dernier reste sensiblement horizontal quelle que soit la position de réglage vertical choisie par l'usager.

## Description

La présente invention se rapporte à une selle équipée d'un dispositif de réglage vertical, en particulier pour motocyclette ou analogue.

On connaît déjà des mécanismes de réglage vertical de selle (en hauteur) pour une motocyclette.

Par exemple, dans le document EP 0 751 062, un mécanisme à paliers aménagé sur le châssis de la motocyclette permet de fixer la selle dans des positions verticales variées et prédéfinies.

Un tel dispositif de réglage vertical externe à la selle exige des modifications importantes au niveau de la selle et du châssis de la motocyclette, ce qui rend sa mise en oeuvre coûteuse et complexe. De plus, le réglage en hauteur n'est pas continu mais par paliers, ce qui empêche un réglage fin parfaitement adapté à l'attente du conducteur.

L'invention a notamment pour but de surmonter les inconvénients précités.

Elle vise en particulier à procurer un dispositif de réglage interne permettant de régler verticalement la selle d'une motocyclette sans entraîner de modifications importantes au niveau du châssis de la motocyclette et de la selle et facilement montable/démontable sur le châssis d'une motocyclette.

L'invention vise également à procurer un réglage fin en hauteur de la selle.

Selon une définition générale de l'invention, la selle pour motocyclette comprend une enveloppe au format de la selle et remplie d'au moins un matériau souple et flexible, et un dispositif de réglage vertical de la selle disposé à l'intérieur de l'enveloppe.

Par exemple, le matériau de remplissage de l'enveloppe comprend du gel ou analogue.

Selon une caractéristique de l'invention, le dispositif de réglage vertical comprend une ossature fixe et un bras longitudinal possédant des première et seconde extrémités, mobile par rapport à l'ossature.

Selon une caractéristique optionnelle de l'invention, le dispositif de réglage vertical comprend des glissières obliques, la première extrémité du bras longitudinal étant apte à coulisser longitudinalement dans lesdites glissières.

Selon une caractéristique complémentaire de l'invention, le dispositif de réglage vertical comprend un élément poussoir actionné par un organe manoeuvrable par l'usager et propre à coopérer avec la seconde extrémité du bras longitudinal pour permettre de faire glisser longitudinalement ledit bras longitudinal dans les glissières obliques et le placer sélectivement dans une position verticale choisie de telle sorte que le bras longitudinal reste sensiblement horizontal quelle que soit la position de réglage vertical choisie par l'usager.

Selon une autre caractéristique optionnelle de l'invention, le dispositif de réglage vertical comprend un mécanisme à crémaillère, mobile en rotation suivant un axe transversal, propre à coopérer avec une tige transversale située à la seconde extrémité du bras longitudinal pour permettre de modifier la position verticale choisie du bras longitudinal.

Selon une caractéristique complémentaire de l'invention, le mécanisme à crémaillère comprend deux glissières dans lesquelles la tige transversale, rappelée par au moins un élément de ressort, est agencée pour être déplacée dans la position de réglage verticale choisie par l'usager, au moins une des glissières comprenant un côté crénelé constitué de crans dans lesquels la tige transversale est propre à être fixée dans la position de réglage verticale choisie par l'usager.

Selon une caractéristique complémentaire de l'invention, le mécanisme à crémaillère est propre à coopérer avec un élément poussoir actionné par un organe manoeuvrable par l'usager afin de fixer la tige dans un cran des côtés crénelés des glissières du mécanisme à crémaillère dans la position de réglage verticale choisie par l'usager.

En pratique, l'organe manoeuvrable par l'usager comprend une bague solidaire de l'élément poussoir et apte à tourner dans une vis sans fin d'axe longitudinal.

De préférence, la selle comprend en outre un dossier possédant une armature sensiblement verticale solidaire de l'ossature de la selle.

Dans une réalisation avantageuse, l'armature du dossier est liée à la seconde extrémité du bras longitudinal de la selle au niveau de la coopération avec l'élément poussoir de telle sorte que le dossier se déplace en liaison avec le déplacement du bras longitudinal.

La présente invention a également pour objet un dispositif de fixation d'un objet, en particulier d'un bagage.

Selon un autre aspect de l'invention, le dispositif de fixation comprend un support propre à être solidarisé à un élément fixe de la motocyclette et/ou de la selle et possédant des premiers moyens d'attache propres à coopérer avec des seconds moyens d'attache solidaires de l'objet.

En pratique, le support est conçu pour rester à demeure sur la selle et/ou la motocyclette tandis que les seconds moyens d'attache sont facilement séparables des premiers moyens d'attache pour permettre un montage ou un démontage de l'objet.

Avantageusement, le dispositif de fixation comprend en outre des moyens de verrouillage/déverrouillage propres à bloquer/débloquer l'objet du support.

Selon une autre caractéristique de l'invention, l'objet comprend un bagage format mallette, au format fixe, ou bien pliable/dépliable.

D'autres caractéristiques et avantages de l'invention apparaîtront à la lumière de la description détaillée ci-après et des dessins dans lesquels :
- la figure 1 est une vue de côté d'une motocyclette équipée d'une selle ainsi que d'un bagage, le dispositif de réglage vertical selon l'invention étant logé à l'intérieur de l'enveloppe formant la selle ;
- la figure 2 est une vue de côté de l'intérieur de la selle selon l'invention, l'enveloppe étant représentée en traits tiretés ;
- la figure 3 est une vue de dessus du dispositif de réglage vertical interne selon l'invention;
- la figure 4 illustre le passage d'une position haute (traits tiretés) à une position basse (traits pleins) selon l'invention;
- la figure 5 est une vue partielle en perspective du mécanisme à glissière selon l'invention;
- la figure 6 est une vue partielle en perspective du mécanisme de réglage manoeuvrable par l'usager selon l'invention;
- la figure 7 est une vue de côté d'un dispositif de fixation d'un objet selon une première forme de réalisation de l'invention ;
- la figure 8 est une vue de dessous du dispositif de fixation de la figure 7 selon l'invention;
- la figure 9 est une vue partielle de côté du dispositif de fixation selon une deuxième forme de réalisation de l'invention dans laquelle l'objet est un bagage pliable/dépliable;
- la figure 10 est une vue de côté représentant le bagage en position dépliée ; et
- la figure 11 est une vue de dessous de l'objet décrit en référence à la figure 10.
- la figure 12 est une vue de côté de l'intérieur de la selle selon un autre mode de réalisation selon l'invention, l'enveloppe étant représentée en traits tiretés ;
- la figure 13 est une vue en coupe dans le plan A-A du mécanisme de réglage à crémaillère du mode de réalisation de la figure 12;
- la figure 14 est une vue en coupe dans le plan B-B du mécanisme de réglage à crémaillère de la figure 13;
- la figure 15 est une vue de coté détaillée du mécanisme de réglage à crémaillère de la figure 12.

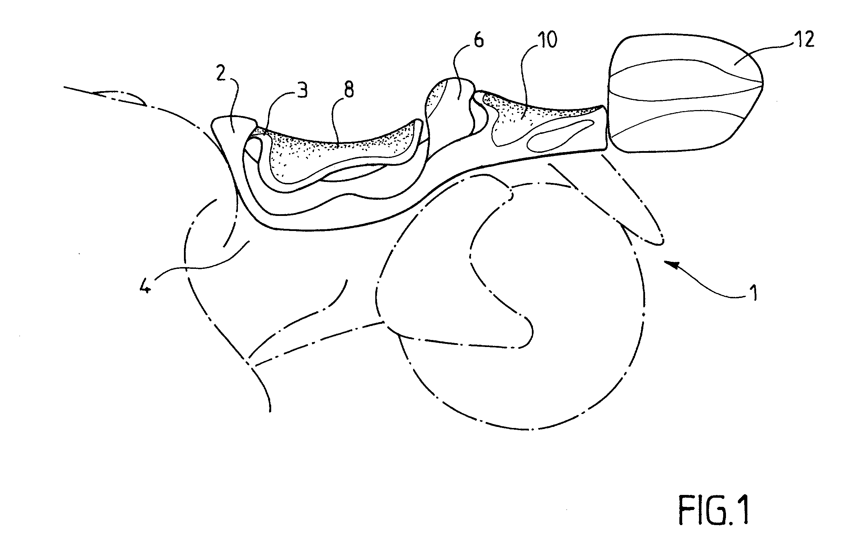

En référence à la figure 1, la motocyclette 1 comprend une selle 2 fixée sur le châssis 4 de la motocyclette 1. La selle comprend par exemple un dossier 6. La selle 2 comprend par exemple deux assises 8 et 10 séparées par le dossier 6. L'assise 8 est destinée au conducteur tandis que l'assise 10 est destinée au passager. Un objet 12, par exemple un bagage ou une sacoche, est fixé sur un point fixe de la motocyclette ou sur la selle, comme on le décrira plus en détail ci-après.

Selon l'invention, un dispositif de réglage vertical interne est destiné à être logé à l'intérieur de la selle 2 et plus particulièrement au niveau de l'assise 8.

La selle 2 comprend une enveloppe 3 remplie d'un matériau souple et flexible. Par exemple, le matériau de remplissage comprend du gel.

Par exemple, l'enveloppe 3 est réalisée en un matériau de type cuir ou simili, polyester, tissu enduit PVC. Une couche en mousse peut aussi être logée à l'intérieur de l'enveloppe.

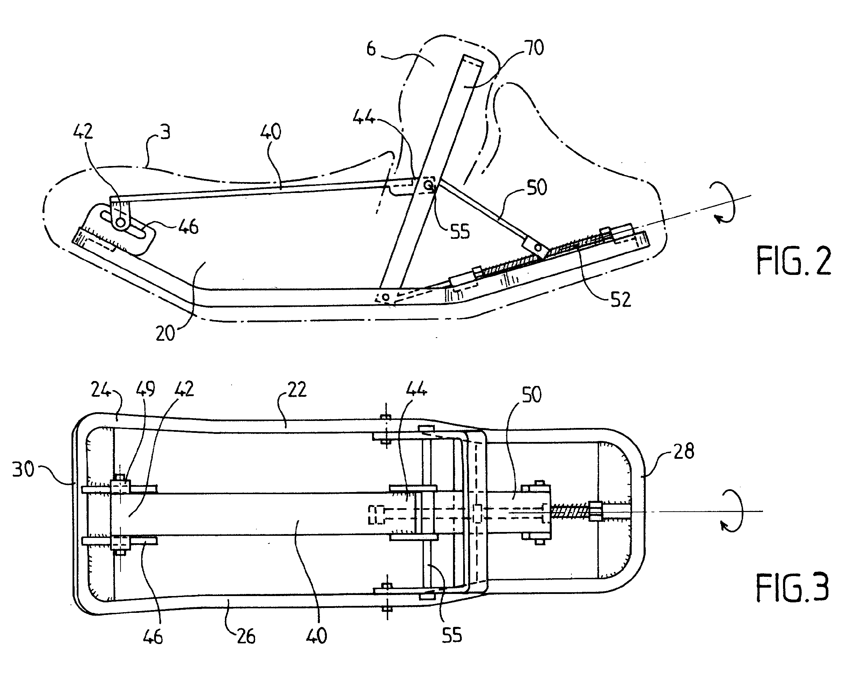

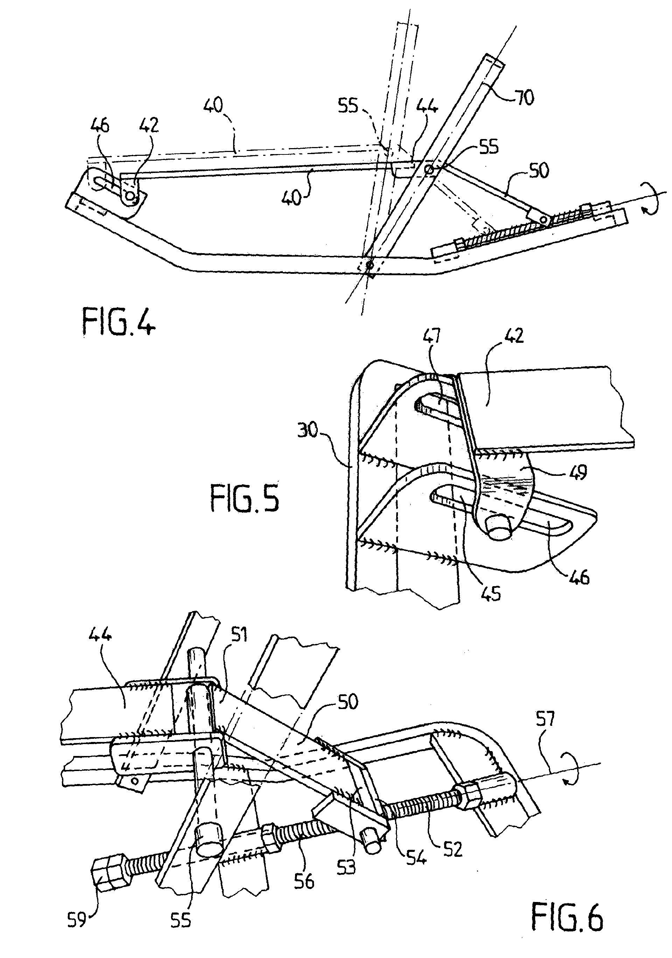

En référence aux figures 2 à 6, le dispositif de réglage est logé à l'intérieur de l'enveloppe 3. Le dispositif de réglage 20 comprend une ossature 22 logée à l'intérieur de l'enveloppe 3. L'ossature 22 comprend deux bras 24 et 26 globalement longitudinaux, reliés l'un à l'autre par des bras transversaux 28 et 30. L'ossature 22 est de préférence métallique, par exemple en aluminium 2 ou 3 G.

Le dispositif de réglage comprend en outre un bras longitudinal 40 sensiblement au format de l'assise plate 8 de la selle. Le bras 40 comprend une première extrémité 42 et une seconde extrémité 44.

Un mécanisme à glissières 46 est fixé sur l'ossature 22. En pratique, le mécanisme à glissières est solidaire du bras transversal 30 reliant les bras longitudinaux 24 et 26 de l'ossature, au niveau de leur partie incurvée vers le haut, la motocyclette étant debout.

Le mécanisme à glissières 46 comprend deux glissières longitudinales 45 et 47 inclinées verticalement. L'extrémité 42 du bras 40 comprend deux pattes 49 aptes à coulisser longitudinalement dans lesdites glissières 45 et 47.

Un mécanisme de réglage vertical est prévu pour déplacer et faire glisser l'extrémité 42 dans le mécanisme à glissières 46 afin de déterminer et régler la position verticale de l'assise plate de la selle définie par la position du bras longitudinal 40. Ce mécanisme de réglage vertical comprend un élément poussoir 50 actionné par un organe 52 manoeuvrable par l'usager. L'élément poussoir comprend deux extrémités 51 et 53. L'extrémité 51 coopère avec la seconde extrémité 44 du bras longitudinal 44 autour d'un axe transversal 55 pour permettre de faire glisser longitudinalement le bras 40 dans le mécanisme à glissières 46 et le placer sélectivement dans une position verticale choisie de telle sorte que le bras longitudinal 40 reste sensiblement horizontal quelle que soit la position de réglage vertical choisie par l'usager.

En pratique, l'autre extrémité 53 de l'organe manoeuvrable 52 par l'usager comprend une bague 54 solidaire de l'élément poussoir 50 et apte à tourner autour d'un axe longitudinal 57 dans une vis sans fin 56. La vis sans fin 52 comprend une extrémité manoeuvrable par l'usager pour déplacer la bague 54, et ainsi régler en hauteur le bras 40.

Avantageusement, la selle comprend en outre un dossier 6 possédant une armature 70 sensiblement verticale solidaire de l'ossature 22 de la selle.

L'armature 70 du dossier est solidaire du bras longitudinal 40 de la selle au niveau de la coopération 55 avec l'élément poussoir 50 de telle sorte que le dossier se déplace en liaison avec la translation longitudinale du bras longitudinal 40.

En raison de la nature souple et flexible du matériau remplissant l'enveloppe de la selle, le changement d'une position à une autre se traduit par la conformation de l'enveloppe à la nouvelle position.

Ainsi, la selle se conforme et épouse la nouvelle forme déterminée par le positionnement du bras 40.

Bien évidemment, l'organe manoeuvrable par l'usager peut être réglable par l'usager de l'intérieur de la selle ou bien encore de l'extérieur de la selle.

D'autres mécanismes formant poussoir et organe manoeuvrable par l'usager peuvent être choisis en lieu et place de l'élément poussoir 50 et de l'organe 52 , par exemple une pièce unique telle qu'un vérin.

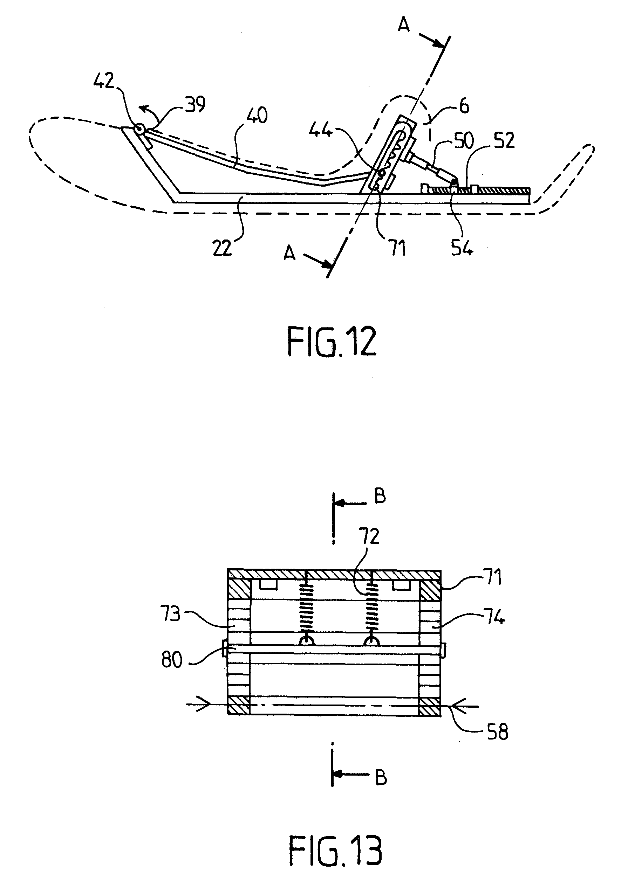

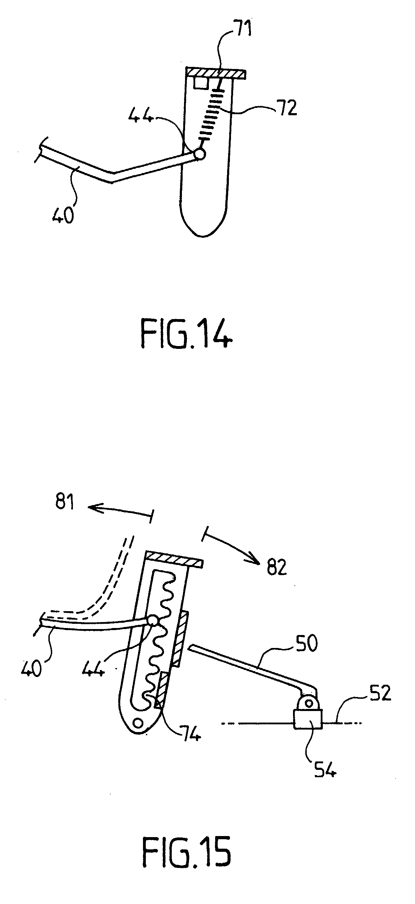

D'autre part, le dispositif de réglage selon l'invention peut être réalisé selon un autre mode de réalisation, comme représenté sur les figures 12 à 15.

Ainsi, le dispositif 20 comprend une ossature 22, globalement réalisée comme décrit précédemment. Comme précédemment, le dispositif de réglage comprend le bras longitudinal 40. Le bras 40 comprend la première extrémité avant 42 et la deuxième extrémité arrière 44.

La première extrémité avant 42 du bras longitudinal est associée à l'ossature 22. Dans ce mode de réalisation, l'extrémité avant 42 est fixée à l'ossature 22 de façon à être mobile en rotation suivant l'axe transversal 39.

Un mécanisme à crémaillère 71 est fixé à l'ossature 22 de manière à être mobile en rotation suivant l'axe transversal 58 situé à son extrémité inférieure. La deuxième extrémité 44 du bras 40 comprend une tige transversale 80 reliée au mécanisme à crémaillère 71.

Le mécanisme à crémaillère 71 comprend deux glissières 73 et 74 munies chacune d'un côté crénelé. Deux ressorts hélicoïdaux 72 relient l'extrémité supérieure du mécanisme à crémaillère 71 à la tige transversale 80.

Sur la figure 12, le mécanisme à crémaillère 71 et le bras 40 sont recouverts d'une enveloppe (en pointillé) qui délimite respectivement le dossier 6 et l'assise plate de la selle.

Lorsque l'assise plate de la selle et le dossier sont dans une position fixe, le mécanisme à crémaillère 71 est arrêté en rotation, d'une part dans le sens 82 par l'élément poussoir 50 en appui contre le mécanisme à crémaillère, et d'autre part dans le sens 81 par la tige 80 logée dans un des crans des côtés crénelés des glissières 73 et 74.

Afin de régler la position de l'assise plate de la selle ainsi que la position du dossier 6, l'usager manoeuvre l'organe manoeuvrable 52 de manière à libérer le mécanisme à crémaillère de l'appui exercé par l'élément poussoir 50. Cette manoeuvre permet le pivotement du mécanisme à crémaillère dans le sens 82 qui libère la tige 80 des crans des côtés crénelés des glissières. Les ressorts 72 exercent une force de rappel sur la tige 80 qui se déplace alors vers l'extrémité supérieure du mécanisme à crémaillère 71.

L'usager peut alors choisir la position de l'assise plate de la selle en appuyant sur l'assise vers le bas. Cette action provoque le glissement de la tige 80 vers les extrémités inférieures des glissières 73 et 74. Afin de fixer l'assise plate de la selle dans la position choisie, l'usager manoeuvre l'organe manoeuvrable 52 de sorte que l'élément poussoir 50 appuie sur le mécanisme à crémaillère 71 jusqu'à ce que la tige 80 se loge dans un des crans des côtés crénelés des glissières 73 et 74. Le mécanisme à crémaillère est alors fixé en rotation dans le sens 82 par l'élément poussoir 50 et dans le sens 81 par la tige 80, comme décrit plus haut.

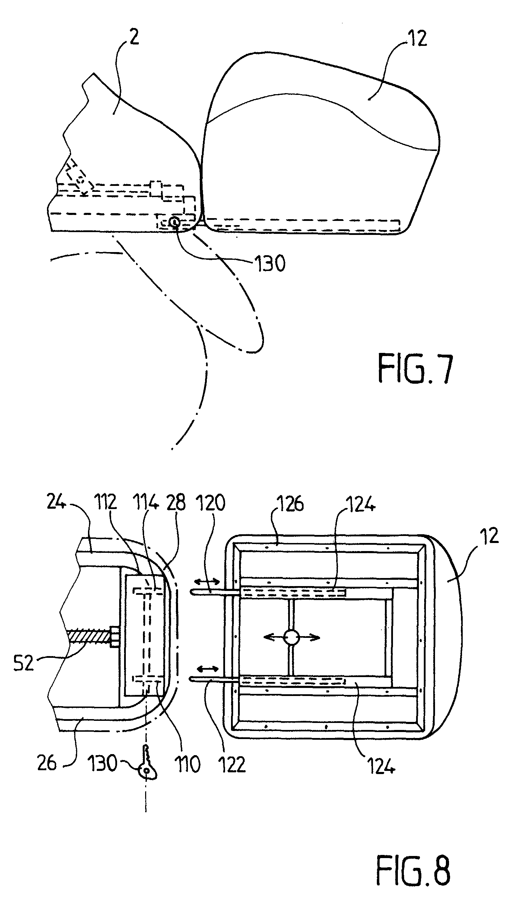

En référence aux figures 7 et 8, l'invention a également pour objet un dispositif de fixation d'un objet 12, tel qu'une sacoche ou bien encore un bagage.

Le dispositif de fixation comprend un support 100 propre à être solidarisé à un élément fixe de la motocyclette et/ou de la selle (ici au niveau du bras transversal 28 reliant les bras 24 et 26 de l'ossature 22 du dispositif de réglage en hauteur décrit en référence aux figures 2 à 6).

Ce support 100 possède des premiers moyens d'attache 110 propres à coopérer avec des seconds moyens d'attache 120 solidaires de l'objet 12.

En pratique, le support est conçu pour rester à demeure sur la selle et/ou la motocyclette tandis que les seconds moyens d'attache 120 sont facilement séparables des premiers moyens d'attache 110 pour permettre un montage ou un démontage de l'objet.

Avantageusement, le dispositif de fixation comprend en outre des moyens de verrouillage 130 propres à bloquer/débloquer l'objet 12.

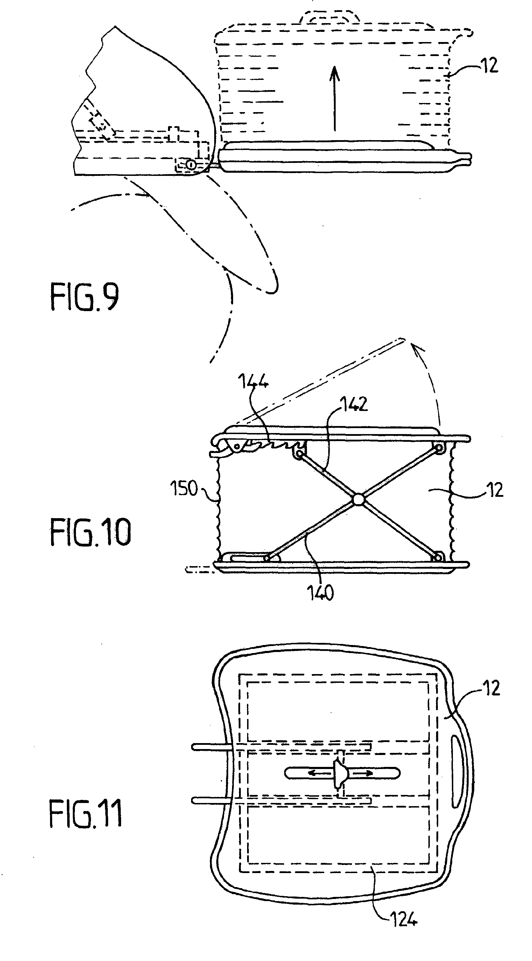

L'objet 12 peut comprendre un bagage formant mallette de type fixe (figures 7 et 8) ou bien encore de type pliable/dépliable (figures 9 à 11).

Selon un premier mode de réalisation, les premiers moyens d'attache 110 comprennent un bloc 112 comportant deux fentes 114.

Les seconds moyens d'attache 120 comprennent deux tiges 122 propres à s'engager dans les fentes 114 et à être maintenues par l'organe de verrouillage 130. Cet organe 130 permet de solidariser ou de désolidariser les moyens d'attache 110 et 120.

Les tiges 122 sont solidaires d'une ossature 124 au format d'un cadre par exemple et sur laquelle est fixée l'objet 12 au moyen d'éléments de fixation de type vis 126 ou analogue.

Le support du dispositif de fixation peut être réalisé sur mesure pour chaque modèle de motocyclette.

En référence aux figures 9 à 11, l'objet selon un second mode de réalisation de l'invention est une mallette pliable/dépliable fixée sur une ossature 124 similaire à celle décrite en référence à la figure 8.

Par exemple, la mallette 12 est à soufflets 150 avec un mécanisme à croisillons 140. Une extrémité d'un croisillon est propre à s'engager dans l'une des encoches 144 ménagées sur l'une des faces principales de la mallette 12 pour maintenir la mallette en position dépliée.

En référence à la figure 9, la mallette 12 est en position pliée. L'extrémité du croisillon 142 est engagée dans une autre encoche correspondant à la position pliée.

Bien entendu, l'invention n'est pas limitée aux formes de réalisation décrites précédemment à titre d'exemples et s'étend à d'autres variantes.

## Revendications

1. Selle pour motocyclette ou analogue, **caractérisée en ce qu'**elle comprend une enveloppe (3) au format de la selle et remplie d'au moins un matériau souple et flexible comprenant du gel, et un dispositif de réglage vertical (20) de la selle disposé à l'intérieur de l'enveloppe (3).

2. Selle selon la revendication 1, **caractérisée en ce que** le dispositif de réglage vertical (20) comprend un organe (52) manoeuvrable par l'usager de l'extérieur de la selle.

3. Selle selon la revendication 1 ou la revendication 2, **caractérisée en ce que** le dispositif de réglage vertical (20) comprend une ossature fixe (22, 24, 26) et un bras longitudinal (40) possédant des première et seconde extrémités (42 et 44), mobile par rapport à l'ossature.

4. Selle selon la revendication 3, **caractérisée en ce que** le dispositif de réglage vertical (20) comprend des glissières obliques (45,47), la première extrémité (42) du bras longitudinal étant apte à coulisser longitudinalement dans lesdites glissières.

5. Selle selon la revendication 4, **caractérisée en ce que** le dispositif de réglage vertical (20) comprend un élément poussoir (50) actionné par un organe (52) manoeuvrable par l'usager et propre à coopérer avec la seconde extrémité (44) du bras longitudinal (40) pour permettre de faire glisser longitudinalement ledit bras longitudinal dans les glissières obliques et le placer sélectivement dans une position verticale choisie de telle sorte que le bras longitudinal (40) reste sensiblement horizontal quelle que soit la position de réglage vertical choisie par l'usager.

6. Selle selon la revendication 3, **caractérisée en ce que** le dispositif de réglage vertical (20) comprend un mécanisme à crémaillère (71), mobile en rotation suivant un axe transversal, propre à coopérer avec une tige transversale (80) située à la seconde extrémité (44) du bras longitudinal (40) pour permettre de modifier la position verticale choisie du bras longitudinal (40).

7. Selle selon la revendication 6, **caractérisée en ce que** le mécanisme à crémaillère (71) comprend deux glissières (73, 74) dans lesquelles la tige transversale (80), rappelée par au moins un élément de ressort (72), est agencée pour être déplacée dans la position de réglage verticale choisie par l'usager, au moins une des glissières comprenant un côté crénelé constitué de crans dans lesquels la tige transversale (80) est propre à être fixée dans la position de réglage verticale choisie par l'usager.

8. Selle selon la revendication 7, **caractérisée en ce que** le mécanisme à crémaillère (71) est propre à coopérer avec un élément poussoir (50) actionné par un organe (52) manoeuvrable par l'usager afin de fixer la tige (80) dans un cran des côtés crénelés des glissières (73,74) du mécanisme à crémaillère (71) dans la position de réglage verticale choisie par l'usager.

9. Selle selon l'une des revendications 5 et 8, **caractérisée en ce que** l'organe (52) manoeuvrable par l'usager comprend une bague (54) solidaire de l'élément poussoir (50) et apte à tourner dans une vis sans fin (56) d'axe longitudinal (57).

10. Selle selon l'une des revendications précédentes, **caractérisée en ce que** la selle comprend en outre un dossier (6) possédant une armature (70) sensiblement verticale solidaire de l'ossature (22) de la selle.

11. Selle selon la revendication 10, rattachée à l'une des revendications 5 et 8, **caractérisée en ce que** l'armature (70) du dossier est liée à la seconde extrémité (44) du bras longitudinal de la selle au niveau de la coopération (55) avec l'élément poussoir de telle sorte que le dossier se déplace en liaison avec le déplacement du bras longitudinal (40).

12. Selle selon l'une des revendications précédentes, **caractérisée en ce qu'**elle comprend en outre un dispositif de fixation d'un objet, en particulier d'un bagage.

13. Selle selon la revendication 12, **caractérisée en ce que** le dispositif de fixation comprend un support (100) propre à être solidarisé à un élément fixe de la motocyclette et/ou de la selle et possédant des premières moyens d'attache (110) propres à coopérer avec des seconds moyens d'attache (120) solidaires de l'objet.

14. Selle selon la revendication 13, **caractérisée en ce que** le support (100) est conçu pour rester à demeure sur la selle et/ou la motocyclette tandis que les seconds moyens d'attache (120) sont facilement séparables des premiers moyens d'attache (110) pour permettre un montage ou un démontage de l'objet.

15. Selle selon la revendication 13 ou la revendication 14, **caractérisée en ce que** le dispositif de fixation comprend en outre des moyens de verrouillage/déverrouillage (130) propres à bloquer/débloquer l'objet du support.

16. Selle selon l'une des revendications 12 à 15, **caractérisée en ce que** l'objet comprend un bagage (12) formant mallette fixe ou pliable/dépliable, et comprenant une ossature (124) solidaire des seconds moyens d'attache (120) et sur laquelle est fixée l'objet (12).
